# EUROPÄISCHE PATENTSCHRIFT

(11) **EP 0 342 413 B1**
(45) Veröffentlichungstag und Bekanntmachung des Hinweises auf die Patenterteilung: **19.03.1997**
(21) Anmeldenummer: 89107733.1
(22) Anmeldetag: 28.04.1989
(51) Int. Cl.: B32B 31/04, B32B 15/08

(54) **Verfahren zur Herstellung eines Wandelementes und danach hergestelltes Wandelement**
Method of making a construction element, and the construction element
Procédé de fabrication d'un élément de construction, et élément de construction

(30) Priorität: 15.05.1988 DE 3816582
(43) Veröffentlichungstag der Anmeldung: 23.11.1989
(73) Patentinhaber: Daimler-Benz Aerospace Airbus Gesellschaft mit beschränkter Haftung, 21129 Hamburg (DE)
(72) Erfinder: Bretz, Erwin, D-2104 Hamburg 92 (DE)
(74) Vertreter: Hansmann, Dierk, Dipl.-Ing.

(56) Entgegenhaltungen:
- EP-A- 0 068 873
- US-A- 4 284 457

## Beschreibung

Die Erfindung bezieht sich auf ein Verfahren nach Anspruch 1 sowie auf ein nach diesem Verfahren hergestelltes Wandelement.

Derartige Wandelemente werden als Kabinentrennwände oder Seitenwände von Stauschränken in Passagierflugzeugen verwendet. Diese Elemente bestehen aus Leichtbauverbundplatten und sind hinsichtlich ihres Aussehens farblich gestaltet. Das Material dieser Platten, insbesondere deren Deckschichten, ist faserverstärkter Kunststoff. Die Vorbereitung für die Farbgestaltung der betreffenden Oberfläche umfaßt
- Schleifen der Oberfläche,
- Füllen der Poren mit einem Porenfüller,
- Spachteln,
- Schleifen und
- Grundieren.

Die Verfahrensschritte zum Glätten der Oberfläche sind erforderlich, weil die betreffenden Deckschichten Unebenheiten infolge einer herstellungsbedingten Welligkeit aufweisen. Diese wird verursacht durch den Wabenkern, indem dieser die Deckschichten nur im Bereich der Wabenwände abstützt. Die genannten Glättungsarbeiten sind sehr zeitaufwendig, was sich ungünstig auf die Herstellkosten auswirkt. Ein weiterer Nachteil dieser Vorgehensweise besteht darin, daß mit dem Herstellen des Bildmotivs erst dann begonnen werden kann, wenn das Wandelement bis auf das Bildmotiv bereits fertiggestellt ist.

Durch die EP-A-0068873 ist eine Leichtbauverbundplatte zur Aufnahme bildlicher Darstellungen oder Informationen bekannt, wie sie beispielsweise auf Messeständen oder in Supermärkten verwendbar sind. Diese Platten bestehen im wesentlichen aus einem aus Holzleisten oder Papierwaben gebildeten Kern, der zwischen zwei Deckschichten aus Pappe angeordnet ist. Daher werden in diesem Dokument Maßnahmen vorgeschlagen, um ein Verwerfen der Platten durch eindringende Feuchtigkeit zu verhindern. Danach ist vorgesehen, daß auf die äußeren Flächen der Deckschichten jeweils eine Schicht eines chemisch neutralen und gegenüber Wasser und Wasserdampf undurchlässigen Materials als Sperrschicht aufgebracht wird. In einer Ausgestaltung dieser Lösung wird vorgeschlagen, daß die Sperrschichten durch Metall- oder Kunststoff-Folien gebildet werden, wobei im Falle einer Metallschicht eine Aluminiumfolie von 0,005 bis 0,1 mm Dicke in Betracht kommt. Dabei besteht eine mögliche Ausgestaltung darin, daß auf eine der Sperrschichten eine Papierlage zur Aufnahme einer durch Farbauftrag zu bildenden Darstellung aufgebracht ist. Hinweise, die zu einem reduzierten Fertigungsaufwand bei der Vorbereitung eines aus glasfaserverstärktem Kunststoff bestehenden Wandelementes für einen Farbauftrag durch Aufsprühen führen könnten, sind diesem Dokument nicht ohne weiteres zu entnehmen.

Demgemäß liegt der Erfindung die Aufgabe zugrunde, ein gattungsgemäßes Verfahren derart anzugeben und ein nach diesem Verfahren hergestelltes Wandelement derart auszubilden, daß die vorgenannten Glättungsarbeiten im wesentlichen entfallen und die Herstellung des Wandelementes erheblich vorteilhafter ablaufen kann.

Diese Aufgabe ist bei den gattungsgemäßen Gegenständen der Ansprüche 1 und 4 durch die in den kennzeichnenden Teilen dieser Ansprüche angegebenen Merkmale gelöst. Vorteilhafte Weiterbildungen der Erfindung sind in den Unteransprüchen angegeben.

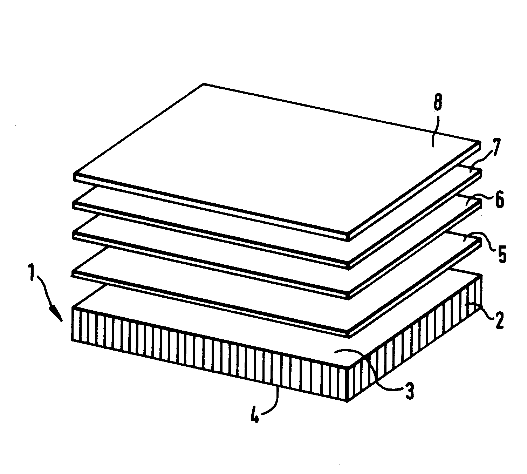

Die Erfindung ist anhand der Zeichnung dargestellt und in der Beispielbeschreibung näher erläutert.

Die Figur zeigt einen Ausschnitt aus der Wandung eines Wandelementes, bestehend aus einer Leichtbauverbundplatte 1 mit einem Wabenkern 2 und den beiden Deckschichten 3 und 4. Dabei sei beispielgemäß nur die obere Deckschicht 3 mit einem Bildmotiv zu versehen. Hierzu werden folgende Verfahrensschritte durchgeführt:
a. Reinigen der Oberfläche des Wandelementes,
b. Auftragen einer Klebstoffschicht 5,
c. Aufkleben eines Aluminiumbleches 6 auf das Wandelement,
d. Aushärten der Klebverbindung,
e. Reinigen des Aluminiumbleches 6,
f. Auftragen und Aushärten einer Grundschicht 7 und
g. Herstellung eines Bildmotivs in an sich bekannter Weise durch Auftragen von Farbschichten 8.

Bei der Gestaltung des Bildmotivs sind alle bekannten Verfahren anwendbar, wie Spritzen, Streichen u.s.w.

Eine Abwandlung der vorgenannten Vorgehensweise besteht darin, daß das Aluminiumblech zunächst auf eine Tragvorrichtung gespannt wird, um hier zunächst die Verfahrensschritte e bis g durchzuführen. Hierzu sind an dem Aluminiumblech Ansätze vorgesehen, die zu dessen vorläufiger Befestigung auf der Tragvorrichtung dienen. Diese Ausgestaltung der Erfindung eröffnet die Möglichkeit, das Bildmotiv herzustellen, wenn sich das betreffende Wandelement seinerseits noch in der Herstellung befindet. Hierdurch können das Wandelement und das Bildmotiv praktisch gleichzeitig ablaufen, wodurch der Fertigungsdurchlauf erheblich beschleunigt wird.

Die zur Herstellung des Wandelementes einschließlich des Bildmotivs verwendbaren Materialien sind frei auswählbar, so daß bezüglich Toxizität und Rauchgasentwicklung im Brandfall optimale Eigenschaften erzielbar sind.

Die Erfindung ist nicht auf die dargestellten und beschriebenen Beispielausführungen beschränkt. Sie erstreckt sich vielmehr auf alle Ausgestaltungen, die im Rahmen der Ansprüche denkbar sind. So kann beispielsweise das Wandelement im Falle einer Kabinentrennwand beidseitig mit einem Bildmotiv versehen sein.

## Patentansprüche

1. Verfahren zur Herstellung eines Wandelementes, für eine Flugzeug-Passagierkabine gebildet aus einer Leichtbauverbundplatte mit einem Kern und zwei Deckschichten aus faserverstärktem Kunststoff und einer Dekorschicht in Form eines darauf in an sich bekannter Weise durch Auftragen verschiedener Farben erzeugten Bildmotivs, **gekennzeichnet**, durch die Vereinigung folgender Verfahrensschritte
a. Reinigen der Oberfläche der Leichtbauverbundplatte,
b. Auftragen einer Klebstoffschicht (5),
c. Aufkleben eines Aluminiumbleches (6) auf die Leichtbauverbundplatte,
d. Aushärten der Klebverbindung,
e. Reinigen des Aluminiumbleches (6),
f. Auftragen und Aushärten einer Grundschicht (7) und
g. Herstellung eines Bildmotivs in an sich bekannter Weise durch Auftragen von Farbschichten (8).

2. Verfahren nach Anspruch 1 in einer abgewandelten Form, dadurch **gekennzeichnet,** daß das Aluminiumblech (6) zunächst auf eine Tragvorrichtung gespannt wird, wo die Herstellung des Bildmotivs durch Grundieren und Auftragen der Farbschichten erfolgt, und das Bildmotiv anschließend durch Ausführung folgender Verfahrensschritte auf die Leichtbauverbundplatte aufgebracht wird.
a. Reinigen der Oberfläche des Leichtbauverbundplatte,
b. Auftragen einer Klebstoffschicht (5),
c. Aufkleben des Aluminiumbleches (6) mit dem Bildmotiv auf die Leichtbauverbundplatte und
d. Aushärten der Klebverbindung.

3. Verfahren nach Anspruch 1 oder 2, dadurch **gekennzeichnet,** daß zum Aufkleben des Aluminiumbleches (6) ein kalt aushärtender Klebstoff verwendet wird.

4. Wandelement für eine Flugzeug-Passagierkabine gebildet aus einer Leichtbauverbundplatte mit einem Kern und zwei Deckschichten aus faserverstärktem Kunststoff und einer Dekorschicht in Form eines darauf in an sich bekannter Weise durch Auftragen verschiedener Farben erzeugten Bildmotivs, **gekennzeichnet,** durch folgenden Schichtaufbau:
a. eine Leichtbauverbundplatte (1),
b. eine Klebstoffschicht (5),
c. ein Aluminiumblech (6),
d. eine Grundschicht (7) und
e. ein aus mehreren Farbschichten (8) bestehendes Bildmotiv.

5. Einbauelement nach Anspruch 4, dadurch **gekennzeichnet,** daß das Aluminiumblech eine Dicke von 0,3 bis 0,4 mm aufweist.

## Claims

1. Method of manufacturing a wall element for an aircraft passenger cabin formed by a lightweight laminated panel having a core and two facings made of fibre-reinforced plastic material and a decorative facing in the form of a pictorial motif produced thereon in a known manner by applying various colours, characterized by the combination of the following process steps:
a. cleaning the surface of the lightweight laminated panel,
b. applying an adhesive layer (5),
c. gluing an aluminium sheet (6) onto the lightweight laminated panel,
d. curing the adhesive join,
e. cleaning the aluminium sheet (6),
f. applying and curing a primary layer (7) and
g. producing a pictorial motif in a known manner by applying layers of colour (8).

2. Method according to claim 1 in a modified form, characterized in that the aluminium sheet (6) is first clamped onto a supporting device, where production of the pictorial motif is effected by priming and applying the layers of colour, and the pictorial motif is then applied onto the lightweight laminated panel by executing the following process steps:
a. cleaning the surface of the lightweight laminated panel,
b. applying an adhesive layer (5),
c. gluing the aluminium sheet (6) with the pictorial motif onto the lightweight laminated panel and
d. curing the adhesive join.

3. Method according to claim 1 or 2, characterized in that a cold-curing adhesive is used for gluing on the aluminium sheet (6).

4. Wall element for an aircraft passenger cabin formed by a lightweight laminated panel having a core and two facings made of fibre-reinforced plastic material and a decorative facing in the form of a pictorial motif produced thereon in a known manner by applying various colours, characterized by the following layer structure:
a. a lightweight laminated panel (1),
b. an adhesive layer (5),
c. an aluminium sheet (6),
d. a primary layer (7) and
e. a pictorial motif comprising a plurality of layers of colour (8).

5. Built-in element according to claim 4, characterized in that the aluminium sheet has a thickness of 0.3 to 0.4 mm.

## Revendications

1. Procédé de fabrication d'un élément de construction pour une cabine de passagers d'un avion formé à partir d'un panneau léger pourvu d'un noyau et de deux couches de recouvrement en matière plastique renforcée par des fibres et d'une couche de décoration sous la forme d'un motif figuratif produit de manière connue sur ladite couche par l'application de différentes couleurs, **caractérisé par** la réunion des étapes suivantes du procédé:
a. nettoyage de la surface du panneau léger,
b. application d'une couche de colle (5),
c. collage d'une tôle d'aluminium (6) sur le panneau léger,
d. durcissement de l'assemblage collé,
e. nettoyage de la tôle d'aluminium (6),
f. application et durcissement d'une couche de base (7) et
g. fabrication d'un motif figuratif de la manière connue par l'application de couches de couleurs (8).

2. Procédé selon la revendication 1 dans une forme modifiée, caractérisé en ce que la tôle d'aluminium (6) est tout d'abord fixée sur un dispositif d'appui, à l'endroit duquel intervient la fabrication du motif figuratif par l'apprêtage et l'application de couches de couleurs, et en ce que le motif figuratif est ensuite amené sur le panneau léger en exécutant les étapes suivantes du procédé:
a. nettoyage de la surface du panneau léger,
b. application d'une couche de colle (5),
c. collage de la tôle d'aluminium (6) avec le motif figuratif sur le panneau léger et
d. durcissement de l'assemblage collé.

3. Procédé selon la revendication 1 ou 2, caractérisé en ce que dans le but de coller la tôle d'aluminium (6) est utilisée une colle durcissant à froid.

4. Elément de construction pour une cabine de passagers d'un avion formé à partir d'un panneau léger pourvu d'un noyau et de deux couches de recouvrement en matière plastique renforcée par des fibres et d'une couche de décoration sous la forme d'un motif figuratif produit de manière connue sur ladite couche par l'application de différentes couleurs, **caractérisé par** la construction en couches suivante:
a. un panneau léger (1),
b. une couche de colle (5),
c. une tôle d'aluminium (6),
d. une couche de base (7) et
e. un motif figuratif se composant de plusieurs couches de couleurs (8).

5. Elément d'encastrement selon la revendication 4, caractérisé en ce que la tôle d'aluminium présente une épaisseur de 0,3 à 0,4 mm.
